# EUROPÄISCHE PATENTANMELDUNG

(11) **EP 3 825 562 A1**
(43) Veröffentlichungstag der Anmeldung: **26.05.2021**
(21) Anmeldenummer: 20207558.6
(22) Anmeldetag: 13.11.2020
(51) Int. Cl.: F16B 37/04, B29C 65/64

(54) **TOLERANZAUSGLEICH FÜR ULTRASCHALL-EINGEBETTETE GEWINDEEINLEGER ZUR BEFESTIGUNG EINES KUNSTSTOFFSTRUKTURBAUTEILS MIT DURCHGANGSLOCH**

(30) Priorität: 20.11.2019 DE 102019131375
(71) Anmelder: Vibracoustic AG, 64293 Darmstadt (DE)
(72) Erfinder: Werner, Philipp, 21339 Lüneburg (DE); Kardoes, Hilrich, 21423 Winsen (DE)
(74) Vertreter: Patentanwälte Olbricht Buchhold Keulertz

(57) **Zusammenfassung**

Die Erfindung betrifft ein Bauteil mit einer Durchgangsbohrung (12) und einem in der Durchgangsbohrung (12) befestigten Einsatzteil (20), wobei das Einsatzteil (20) sich entlang einer Längsachse (22) in der Durchgangsbohrung (12) erstreckt und an einem Endstück (28) ein sich zumindest teilweise um die Längsachse (22) erstreckendes Kragenelement (24) mit einer von der Längsachse (22) weg weisenden Randfläche (26) aufweist und die Durchgangsbohrung (12) ein Senkungselement (14) zur Aufnahme des Kragenelements (24) umfasst, dadurch gekennzeichnet, dass das Bauteil (10) ein das Kragenelement (24) mit dem Senkungselement (14) verbindendes Toleranzausgleichselement (16) aufweist, das sich entlang des Kragenelements (24) zumindest bis zur Randfläche (26) erstreckt. Mit der Erfindung wird ein verbessertes Bauteil (10) bereitgestellt, bei dem eine Lockerung des Einsatzteils (20) und Spalte zwischen dem Einsatzteil (20) und dem Bauteil (10) trotz Längentoleranzen vermieden werden.

## Beschreibung

Die Erfindung betrifft ein Bauteil und ein Verfahren zum Befestigen eines Einsatzteils in einer Durchgangsbohrung eines Bauteils.

Zur Verbindung von Bauteilen können verschiedene Befestigungsmittel verwendet werden. In einer Vielzahl von Bauteilen, zum Beispiel Kunststoffstrukturbauteilen aus Fahrwerken, können die Befestigungsmittel materialbedingt nicht einstückig mit dem Bauteil hergestellt werden. In diesen Bauteilen werden Durchgangsbohrungen hergestellt, in die Einsatzteile eingeführt werden. Die Einsatzteile können dabei zum Beispiel Innengewinde oder Gewindestangen usw. als Komponenten der Befestigungsmittel aufweisen. Die Einsatzteile bestehen in der Regel aus Metall.

Aus der DE 38 31 308 C1 ist bekannt, einen Gewindeeinsatz in eine Öffnung einer Ölwanne einzusetzen. Der Gewindeeinsatz weist einen Kragen mit einer Klebeeinrichtung auf. Mittels der Klebeeinrichtung wird der Kragen mit einer Senkung der Öffnung verbunden.

Aus der DE 32 09 920 C2 ist ein Kunststoffteil mit einem Sackloch bekannt, in das ein Gewindeeinsatz eingesteckt wird. Der Gewindeeinsatz umfasst einen Kragen mit einer Schweißrippe. Die Schweißrippe wird beim Einsetzen des Kunststoff-Gewindeeinsatzes in das Sackloch an einer Senkung des Sacklochs angeordnet. Mittels Ultraschallschweißens wird die Schweißrippe geschmolzen und der Gewindeeinsatz an dem Bauteil befestigt.

Bekannt ist weiter, die Einsatzteile mittels Presspassung nach dem Spritzguss von Kunststoffstrukturbauteilen in die entsprechenden Durchgangsbohrungen einzusetzen. Hier können jedoch nach der Presspassung umfängliche Zugspannungen an der Durchgangsbohrung entstehen. Bei ungünstiger Toleranzlage und bei einer nicht ausreichenden Überdeckung der Einsatzteile mit den Durchgangsbohrungen erfolgt keine ausreichende Verbindung zwischen dem Einsatzteil und der Durchgangsbohrung, sodass das Einsatzteil aus der Durchgangsbohrung herausfallen kann.

Weiter können aufgrund von Längentoleranzen zwischen dem Einsatzteil und der Länge der Durchgangsbohrung Spalte zwischen dem Bauteil und einem daran befestigten anderen Bauteil entstehen. Die Spalte begünstigen Relativbewegungen zwischen dem Einsatzteil und dem Bauteil, wodurch der Verschleiß erhöht wird. Dies kann zu einer Lockerung des Einsatzteils und/ oder zu Geräuschen oder im ungünstigsten Fall zu einem Versagen des Bauteils führen.

Weiter bekannt ist es, Einlegeteile mit den Komponenten der Befestigungsmittel zu verwenden, die beim Spritzguss in das Bauteil eingebettet bzw. umspritzt werden. Hier können aufgrund von unterschiedlichen Wärmeausdehnungskoeffizienten des Einsatzteils und des Kunststoffstrukturbauteils umfängliche Zugspannungen entstehen. Gerade an Bindenähten, die beim Spritzguss entstehen können, sind diese Zugspannungen besonders kritisch.

Aufgabe der Erfindung ist es daher, ein verbessertes Bauteil und ein verbessertes Verfahren zum Befestigen eines Einsatzteils in einer Durchgangsbohrung eines Bauteils bereitzustellen, bei dem eine Lockerung des Einsatzteils und Spalte zwischen dem Einsatzteil und dem Bauteil trotz Längentoleranzen des Einsatzteils und des Bauteils vermieden werden.

Hauptmerkmale der Erfindung sind in den Ansprüchen 1, 5 und 6 angegeben. Ausgestaltungen sind Gegenstand der Ansprüche 2 bis 4 und 7 bis 10.

Bei einem Bauteil mit einer Durchgangsbohrung und einem in der Durchgangsbohrung befestigten Einsatzteil, wobei das Einsatzteil sich entlang einer Längsachse in der Durchgangsbohrung erstreckt und an einem Endstück ein sich zumindest teilweise um die Längsachse erstreckendes Kragenelement mit einer von der Längsachse weg weisenden Randfläche aufweist und die Durchgangsbohrung ein Senkungselement zur Aufnahme des Kragenelements umfasst, ist erfindungsgemäß vorgesehen, dass das Bauteil ein das Kragenelement mit dem Senkungselement verbindendes Toleranzausgleichselement aufweist, das sich entlang des Kragenelements zumindest bis zur Randfläche erstreckt.

Kern der Erfindung ist damit das Bereitstellen eines Toleranzausgleichselements zwischen dem Kragenelement und dem Senkungselement, wobei das Toleranzausgleichselement mittels einer Schmelze aus dem Material des Bauteils hergestellt wird. Das Toleranzausgleichselement erstreckt sich dabei bis zu einer Randfläche des Kragenelements. Der Spalt, der nach dem Einsetzen des Einsatzteils zwischen dem Kragenelement und dem Senkungselement entsteht, wird beim Erzeugen des Toleranzausgleichselement durch die Schmelze aufgefüllt, sodass anstelle des Spalts ein Toleranzausgleichselement zwischen dem Kragenelement und dem Senkungselement hergestellt wird. Der Spalt bildet somit die Form für die Herstellung des Toleranzausgleichselements. Die Breite des Spaltes hängt maßgeblich von den Längentoleranzen des Einsatzteils im Bereich der Durchgangsbohrung und des Bauteils an der Durchgangsbohrung ab. D. h. das Toleranzausgleichselement weist keine vordefinierte feste Dicke auf. Stattdessen hängt die Dicke des Toleranzausgleichselements von den o. g. Toleranzen ab. Das Toleranzausgleichselement füllt nach dessen Erzeugung den Spalt bzw. den Hohlraum zwischen Kragenelement und Senkungselement, sodass ein definierter Kraftfluss zwischen dem Einsatzteil und dem Bauteil über das Kragenelement bewirkt wird. Weiter erstreckt sich das Toleranzausgleichselement mindestens bis zur Randfläche des Kragenelements, sodass ein möglichst vollflächiger Ausgleich von Längentoleranzen des Einsatzteils im Bereich der Durchgangsbohrung bewirkt wird. Damit weist das Bauteil zwischen dem Kragenelement des Einsatzteils und dem Senkungselement ein Toleranzausgleichselement auf, das sich bis zur Randfläche des Kragenelements erstreckt. Das Toleranzausgleichselement gleicht damit Fertigungstoleranzen zwischen dem Einsatzteil und dem Bauteil aus. Dies bewirkt weiter einen ausreichenden Festsitz des Einsatzteils am Bauteil. Außerdem vermeidet die Erstreckung des Toleranzausgleichselements bis zur Randfläche unabhängig von Toleranzen des Einsatzteils bzw. des Bauteils wirksam einen Spalt zwischen dem Einsatzteil und dem Bauteil. Damit wird Verschleiß und eine Lockerung des Einsatzteils durch Relativbewegungen zwischen dem Einsatzteil und dem Bauteil vermieden. Durch die Unabhängigkeit des Toleranzausgleichs durch das Toleranzausgleichselement von den Toleranzen des Einsatzteils und des Bauteils können größere Toleranzen beim Herstellen des Einsatzteils und des Bauteils in Kauf genommen werden. Dies verringert die Kosten der Herstellung des Einsatzteils und des Bauteils.

Das Kragenelement kann sich weiter beispielsweise um die gesamte Längsachse des Einsatzteils erstrecken und damit ein voll umlaufender Kragen sein. Die Randfläche, die von dem Einsatzteil bzw. der Längsachse weg weist, erstreckt sich dann ebenfalls um die gesamte Längsachse herum. Im Schritt Verteilen kann die Schmelze dazu zum Beispiel durch die Ausübung von Druck auf das Einsatzelement in Richtung der Durchgangsbohrung bis zur Randfläche des Kragenelements gedrückt werden. Alternativ oder zusätzlich kann die Schmelze aufgrund eines von dem Einsatzteil in der Durchgangsbohrung auf das Material des Bauteils ausgeübten Drucks entlang des Spalts bis zur Randfläche gepresst werden.

Das Einsatzteil kann weiter aus Metall hergestellt sein, wobei das Bauteil aus einem Kunststoff hergestellt sein kann, aus dem auch das Toleranzausgleichselement hergestellt ist.

Gemäß einem Beispiel kann das Toleranzausgleichselement zwischen dem Senkungselement und dem Kragenelement eine Dicke von mindestens 0,2 mm, vorzugsweise in einem Bereich zwischen 0,2 mm und 5 mm, weiter vorzugsweise in einem Bereich zwischen mindestens 0,2 mm und 2,5 mm, am meisten bevorzugt in einem Bereich zwischen mindestens 0,2 mm und 1 mm, aufweisen.

In der Regel bedeutet dies auch, dass die Schmelze und der Spalt eine Dicke innerhalb der oben genannten Bereiche zwischen dem Kragenelement und dem Senkungselement aufweisen. Dementsprechend können zumindest Längentoleranzen des Einsatzteils, die einen Spalt zwischen dem Kragenelement und dem Senkungselement von mindestens 0,2 mm erzeugen, durch das Toleranzausgleichselement ausgeglichen werden. Dies vermeidet, dass eine Fließbewegung der Schmelze im Spalt beeinträchtigt oder blockiert wird. Ansonsten könnte die Schmelze in Richtung des weiteren Endstückes getrieben werden, und dort in Form einer dünnen Haut erstarren. Ein definierter Kraftfluss wäre so nicht möglich.

Ein dem Endstück gegenüberliegendes weiteres Endstück kann durch die Durchgangsbohrung geführt werden, bis das weitere Endstück auf der anderen Seite des Bauteils bündig am Bauteil anliegt. Die Position, in der das weitere Endstück auf der anderen Seite des Bauteils bündig am Bauteil anliegt, wird im Weiteren Montageposition genannt.

Dabei kann das Einsatzteil zum Beispiel von einer am Bauteil vorgesehenen Unterseite durch das Bauteil und die Durchgangsbohrung geführt werden, wobei das weitere Endstück bündig mit der vorgesehenen Oberseite des Bauteils in der Montageposition abschließt. Ein Befestigungsmittel kann dann über das weitere Endstück mit dem Einsatzteil verbunden werden. Das Kragenelement dient dann als Haltemittel des Einsatzteils in der Durchgangsbohrung. Durch das Toleranzausgleichselement wird eine unmittelbare Verbindung zwischen dem Kragenelement und dem Senkungselement geschaffen, mit der ein definierter Kraftfluss zwischen dem Einsatzteil und dem Bauteil eingestellt werden kann.

Weiter kann das Material, aus dem das Toleranzausgleichselement gebildet wird, beispielsweise in einem aus dem Senkungselement hervorragenden Depotelement angeordnet sein.

Das Depotelement kann in Richtung des einzuführenden Kragenelements ragen und eine Materialmenge aufweisen, die bei einem Verflüssigen des Materials sicherstellt, dass genügend Material zur Verfügung steht, um das Material bei der Herstellung des Toleranzausgleichselement entlang des Kragenelements bis zur Randfläche zu verteilen. Weiter kann das Depotelement so ausgebildet sein, dass es sich unabhängig von den Toleranzen bis zum Kragenelement erstreckt. Das Kragenelement übt in diesem Fall beim Einsetzen des Einsatzteils in die Durchgangsbohrung Druck auf das Depotelement aus. Beim Verflüssigen des Materials unterstützt dieser Druck das Verteilen der Schmelze entlang des Kragenelements bis zur Randfläche. Damit wird die Passung entkoppelt und damit das Volumen der Schmelze zwischen der Durchgangsbohrung und dem Einsatzteil von der notwendigen Menge an Schmelze für den vollständig ausgefüllten Spalt unter dem Kragenelement auch im Falle der ungünstigsten Toleranzlage, bzw. dem breitesten Spalt in der Montageposition zur Verfügung gestellt.

Die Erfindung betrifft weiter ein Bauteil zum Befestigen eines Einsatzteils in einer Durchgangsbohrung zur Aufnahme eines zu befestigenden Einsatzteils, wobei das zu befestigende Einsatzteil an einem Endstück ein sich zumindest teilweise um die Längsachse erstreckendes Kragenelement mit einer von der Längsachse weg weisenden Randfläche aufweist und die Durchgangsbohrung ein Senkungselement zur Aufnahme des Kragenelements umfasst, wobei erfindungsgemäß vorgesehen ist, dass das Senkungselement ein Depotelement zum Verflüssigen von Material zum Erzeugen eines zwischen dem Kragenelement des zu befestigenden Einsatzteils und dem Senkungselement angeordneten Toleranzausgleichselements aufweist.

Damit betrifft die Erfindung ebenfalls ein Bauteil, das speziell zum Befestigen eines Einsatzteils in einer Durchgangsbohrung eines Bauteils hergestellt wurde. Das Bauteil weist dabei ein Depotelement zum Verflüssigen von Material auf, wobei mit dem verflüssigten Material das Toleranzausgleichselement ganz oder mindestens teilweise hergestellt wird. Das Depotelement kann sich dabei beispielsweise von dem Senkungselement in Richtung des einzuführenden Kragenelements erstrecken. Nach dem Einführen des Einsatzteils in die Durchgangsbohrung ist das Depotelement zwischen dem Senkungselement und dem Tragelement angeordnet. Dabei kann sich das Depotelement zum Beispiel von dem Kragenelement bis zu dem Senkungselement erstrecken, so dass das Kragenelement einen Druck auf das Depotelement bewirkt.

Weiter betrifft die Erfindung ein Verfahren zum Befestigen eines Einsatzteils in einer Durchgangsbohrung eines Bauteils, wobei das Einsatzteil an einem Endstück ein sich zumindest teilweise um eine Längsachse des Einsatzteils erstreckendes Kragenelement aufweist, das von einer von der Längsachse weg weisenden Randfläche begrenzt wird, und die Durchgangsbohrung ein Senkungselement zur Aufnahme des Kragenelements aufweist, wobei das Verfahren die folgenden Schritte aufweist: Einsetzen des Einsatzteils in die Durchgangsbohrung, wobei das Kragenelement von dem Senkungselement aufgenommen wird und mindestens ein Spalt zwischen dem Senkungselement und dem Kragenelement gebildet wird, der sich entlang des Kragenelements zumindest bis zur Randfläche erstreckt; Verflüssigen von zwischen dem Einsatzteil und dem Bauteil angeordneten Kunststoff zu einer Schmelze während des Schrittes Einsetzen; Verteilen der Schmelze im Spalt entlang des Kragenelements zumindest bis zur Randfläche, bis die Schmelze den Spalt vollständig füllt und somit den Spalt zwischen Senkungselement und Kragenelement verbindet; und Erstarren durch Abkühlen der Schmelze zu einem Toleranzausgleichselement zum Befestigen des Einsatzteils in der Durchgangsbohrung des Bauteils.

Vorteile und Wirkungen sowie Weiterbildungen des Verfahrens ergeben sich aus den Vorteilen und Wirkungen sowie Weiterbildungen des oben beschriebenen Bauteils. Es wird daher in dieser Hinsicht auf die vorangegangene Beschreibung verwiesen.

Gemäß einem weiteren Beispiel kann im Schritt Verflüssigen der Kunststoff mittels Ultraschall geschmolzen werden.

Die Verwendung von Ultraschall zum Schmelzen von Kunststoff ist kostengünstig und vereinfacht das Verbinden des Einsatzteils mit dem Bauteil. Weiter wird damit auf einfache Weise eine Verflüssigung des Materials zur Herstellung des Toleranzausgleichselements bewirkt.

Im Schritt Verteilen kann die Schmelze gemäß einem weiteren Beispiel über die Randfläche aus dem Spalt austreiben.

Der Spalt mündet dabei in die Umgebung des Bauteils bzw. des Einsatzteils. Die Schmelze, die einen Überschuss bei der Erzeugung des Toleranzausgleichselements bildet, wird dabei aus dem Spalt in die Umgebung des Bauteils bzw. des Einsatzteils herausgedrückt. Gegebenenfalls kann dieses überschüssige Material in einem nachfolgenden Schritt entfernt werden.

Weiter kann gemäß einem weiteren Beispiel im Schritt Verteilen die Schmelze in die Durchgangsbohrung aus dem Spalt austreiben.

In diesem Fall erstreckt sich der Spalt zumindest bis zum Einsatzteil, sodass überschüssiges verflüssigtes Material, das zur Herstellung des Toleranzausgleichselements nicht weiter benötigt wird, entlang des Einsatzteils in die Durchgangsbohrung fließen kann. Damit wird vermieden, dass sich das überschüssige Material außerhalb des Bauteils sammelt und gegebenenfalls die Maße des Bauteils verändert.

Gemäß einem weiteren Beispiel wird im Schritt Verflüssigen Kunststoff verflüssigt, der zwischen dem Kragenelement und dem Senkungselement angeordnet ist.

Dazu kann zusätzlicher Kunststoff zum Aufschmelzen an dem Senkungselement angeordnet sein, das beim Einsetzen des Einsatzteils in die Durchgangsbohrung zwischen dem Kragenelement und dem Senkungselement positioniert ist. Ein Schmelzen des zusätzlichen Kunststoffs generiert direkt zwischen dem Kragenelement und dem Senkungselement verflüssigten Kunststoff bzw. Schmelze, die sich entlang des Kragenelements bis zur Randfläche verteilen kann. Hierdurch wird ein Teil oder das gesamte des für die Bildung des Toleranzausgleichselementes benötigte Volumen der Schmelze zur Verfügung gestellt. Überschüssiges Volumen der Schmelze wird aus dem zylindrischen Bereich der Durchgangsbohrung beispielsweise über das Kragenelement hinaus nach außen verdrängt, nachdem der Spalt zwischen Kragenelement und Senkungselement in der Montageposition vollständig gefüllt ist. Dieses verringert die notwendige Menge verdrängter, Schmelze aus der Durchgangsbohrung, sodass die Passung zwischen Durchgangsbohrung im Bauteil und dem Einsatzteil unabhängig von der für das Toleranzausgleichselement benötigten Volumen der Schmelze eingestellt werden kann.

Weitere Merkmale, Einzelheiten und Vorteile der Erfindung ergeben sich außerdem aus dem Wortlaut der Ansprüche sowie aus der folgenden Beschreibung von Ausführungsbeispielen anhand der Zeichnungen. Es zeigen:
- Fig. 1: eine schematische Schnittdarstellung eines Bauteils mit einer schematischen Darstellung eines nicht geschnittenen Einsatzteils in getrenntem Zustand;
- Fig. 2a, b: eine schematische Schnittdarstellung des Bauteils und einer schematischen Darstellung des nicht geschnittenen Einsatzteils mit einem dazwischen angeordneten Spalt;
- Fig. 3a, b: eine schematische Schnittdarstellung des Bauteils mit einer schematischen Darstellung des nicht geschnittenen Einsatzteils in der Durchgangsbohrung in der Montageposition;
- Fig. 4: eine schematische Schnittdarstellung eines Bauteils mit einem Depotelement und einer schematischen Darstellung des nicht geschnittenen Einsatzteils in getrenntem Zustand;
- Fig. 5a-d: eine schematische Schnittdarstellung eines Bauteils und schematische Darstellungen des Einsatzteils mit Drehmomentübertragungselementen in verschiedenen Ansichten; und
- Fig. 6: ein Flussdiagramm des Verfahrens zum Befestigen eines Einsatzteils in einer Durchgangsbohrung eines Bauteils.

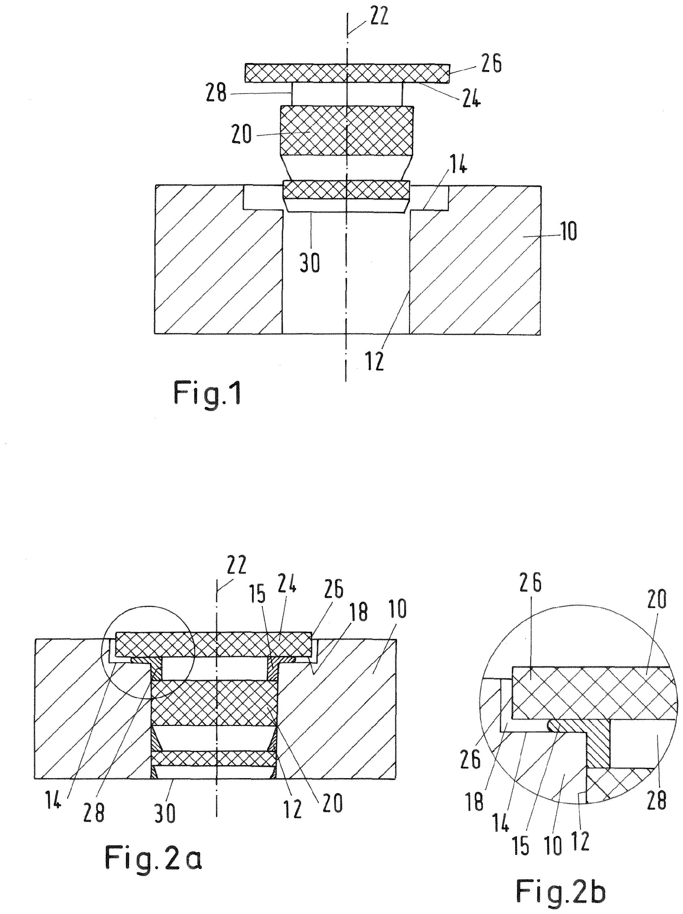

In Figur 1 wird ein Bauteil 10 in einer Schnittdarstellung und ein Einsatzteil 20 in einer schematischen Darstellung gezeigt. Das Einsatzteil 20 ist dabei noch nicht in das Bauteil 10 eingeführt. Das Material, aus dem das Bauteil 10 besteht, ist in diesem Beispiel Kunststoff. Weiter kann das Bauteil 10 zum Beispiel mittels Spritzguss hergestellt sein.

Das Einsatzteil 20 ist in diesem Beispiel aus einem Metall hergestellt und kann zum Beispiel ein Gewindeeinleger bzw. eine Gewindebuchse oder ein Einsatz mit herausstehender Gewindestange sein. Ebenfalls kann das Einsatzteil 20 eine Buchse oder eine Stange ohne Gewinde aufweisen.

Das Bauteil 10 umfasst eine Durchgangsbohrung 12, die als Durchgangsbohrung durch das Bauteil 10 ausgebildet ist. An einem Ende der Durchgangsbohrung 12 ist ein Senkungselement 14 angeordnet, das zur Aufnahme eines Kragenelements 24 eines Einsatzteils 20 ausgebildet ist. Das Senkungselement 14 erstreckt sich in diesem Ausführungsbeispiel ringförmig um die Durchgangsbohrung 12 herum.

Das Einsatzteil 20 erstreckt sich entlang einer Längsachse 22. Beim Einsetzen des Einsatzteils 20 in die Durchgangsbohrung 12 überdeckt sich die Längsachse 22 mit einer Längsachse der Durchgangsbohrung 12. Auf einigen äußeren, radial umlaufenden Flächen sind für einen besseren Formschluss zur Übertragung von Drehmomenten Strukturen, beispielsweise Rändelungen, aufgebracht.

Weiter umfasst das Einsatzteil 20 ein Endstück 28 und ein dem Endstück 28 gegenüberliegendes weiteres Endstück 30. Am Endstück 28 umfasst das Einsatzteil 20 ein Kragenelement 24, das sich zumindest teilweise um die Längsachse 22 des Einsatzteils 20 erstreckt. In diesem Ausführungsbeispiel erstreckt sich das Kragenelement 24 ringförmig um die Längsachse 22. Das Kragenelement 24 weist weiter eine Randfläche 26 auf, die sich ebenfalls ringförmig um die Längsachse 22 erstreckt und von der Längsachse 22 weg weist.

Das Kragenelement 24 ist dazu ausgebildet, von dem Senkungselement 14 aufgenommen zu werden. Das Kragenelement 24 kann dabei senkrecht zur Längsachse 22 ganz oder teilweiseeinen kleineren Durchmesser als das Senkungselement 14 aufweisen.

Die Erstreckung des Einsatzteils 20 entlang der Längsachse 22 ist aufgrund einer ungünstigen Toleranzlage größer als die Erstreckung der Durchgangsbohrung 12 durch das Bauteil 10. Dabei werden die auftretenden Spalte und Abweichungen zur besseren Visualisierung deutlich überhöht dargestellt. Wenn das Endstück 30 daher durch die Durchgangsbohrung 12 geführt wird und in der Montageposition bündig mit dem Bauteil 10 abschließen soll, ragt ein Teil des Kragenelements 24 aus dem Senkungselement 14 hervor und schließt nicht bündig mit dem Bauteil 10 ab. Vor allem aber wird zwischen dem Kragenelement 24 und dem Senkungselement 14 dadurch ein Spalt 18 gebildet. Der Spalt 18 kann sich dabei ringförmig um die Längsachse 22 erstrecken. Weiter erstreckt sich der Spalt 18 in einer Richtung senkrecht von der Längsachse 22 weg mindestens bis zur Randfläche 26. In diesem Beispiel erstreckt sich der Spalt 18 weiter zwischen der Randfläche 26 und dem Senkungselement 14 und weist dabei einen Ausgang in die Umgebung des Bauteils 10 auf.

Figur 2a zeigt den Zustand in der Montageposition, in dem das Einsatzteil 20 in die Durchgangsbohrung 12 eingeführt ist, wobei das Endstück 30 bündig mit dem Bauteil 10 abschließt. In diesem Zustand kann zum Erzeugen von Schmelze 15 Ultraschall verwendet werden, um den Kunststoff des Bauteils 10 zu schmelzen und damit zu verflüssigen. Die Schmelze 15 wird dabei an einer Wand der Durchgangsbohrung 12 und/oder des Senkungselements 14 erzeugt und fließt entlang des Spalts 18 zwischen das Senkungselement 14 und das Kragenelement 24.

Wenn die Menge der Schmelze 15 nicht ausreichend wäre, würde ein Spalt zwischen dem Kragenelement 26 und dem Senkungselement 14 nach dem Erstarren der Schmelze 15 verbleiben. Ein sicherer Festsitz wäre in diesem Fall nicht gegeben.

Dies ist in einer Detailansicht in Figur 2b genauer dargestellt. Die Schmelze 15 hat dabei einen Bereich zwischen der Durchgangsbohrung 12 und dem Endstück 28 des Einsatzteil 20 gefüllt, fließt allerdings nicht weiter entlang des Spalts 18 zwischen dem Senkungselement 14 und dem Kragenelement 24. Der Spalt 18 wird daher von der Schmelze 15 nicht gefüllt, so dass die Schmelze 15 das Kragenelement 24 und das Senkungselement 14 lediglich teilweise verbindet. In diesem Beispiel wurde kein Toleranzausgleichselement 16 vorgesehen. Daher verbleibt ein Teil des Spalts 18 aufgrund ungünstiger Fertigungstoleranzen der Dicke des Bauteils 10 und der Länge des Einsatzteil 20 entlang einer Richtung parallel zu der Längsachse 22 in der Montageposition. Das Beispiel zeigt daher den ungünstigen Fall des Standes der Technik, bei dem das während des Einbettens des Einsatzteils 20 gebildete Volumen der Schmelze 15 nicht ausreicht, um den Spalt 18 vollständig zu füllen. Ein definierter Kraftfluss kann daher nicht sichergestellt werden, da der Spalt nicht oder nur teilweise, vor allem aber undefiniert mit Schmelze 15 gefüllt wird.

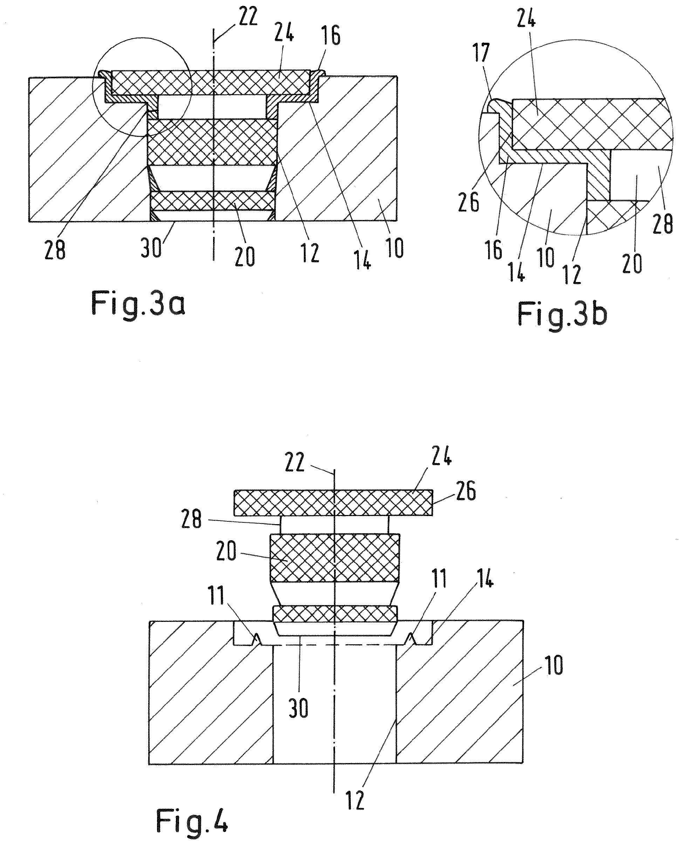

In der Figur 3a ist ein Einsatzteil mit einem erfindungsgemäßen Toleranzausgleichselement 16 dargestellt. Hierbei wurde das während des Einsetzens des Einsatzteils 20 in das Bauteil 10 gebildete Volumen der Schmelze 15 so ausgelegt, dass ein Teil 17 der Schmelze 15 immer mindestens ein Toleranzausgleichselement 16 mit mindestens der Dicke 0,2 mm in der Montageposition bildet. Hierzu ist es notwendig, dass der überschüssige Teil 17 der Schmelze 15 aus dem Spalt 18 in die Umgebung ausgetrieben werden kann. Der überschüssige Teil 17 der Schmelze 15 erstarrt dabei außerhalb des Spalts 18. Der Rest der Schmelze 15 bildet nach dem Erstarren das Toleranzausgleichselement 16. Fig. 3b zeigt dazu eine Detailansicht.

Alternativ oder zusätzlich kann ein überschüssiger Teil 17 der Schmelze 15 in die Durchgangsbohrung 12 zwischen dem Einsatzteil 20 und der Durchgangsbohrung 12 ausgetrieben werden. Jedoch sollte vermieden werden, dass Schmelze auf die Stirnfläche des Endstückes 30 des Einsatzteils 20 austreiben kann und so einen zuverlässigen Kraftfluss verhindern kann.

Figur 4 zeigt ein weiteres bevorzugtes Ausführungsbeispiel für das Bauteil 10. Aus Übersichtsgründen ist ebenfalls das Einsatzteil 20 dargestellt, welches in diesem Beispiel ohne Rändelungen ausgeführt ist. In diesem Ausführungsbeispiel umfasst das Bauteil 10 ein Depotelement 11, das an dem Senkungselement 14 angeordnet ist. Das Depotelement 11 kann sich ebenfalls ringförmig um die Längsachse 22 erstrecken. Alternativ können mehrere Depotelemente 11 vorgesehen werden, die an verschiedenen Positionen am Senkungselement 14 positioniert sind.

Das Depotelement 11 umfasst dabei das Material, aus dem das Toleranzausgleichselement 16 erzeugt werden soll. Aus dem Material des Depotelements 11 kann dabei zum Beispiel mittels Ultraschall Schmelze 15 erzeugt werden. Dabei wird in diesem Fall am Senkungselement 14 genügend Schmelze 15 bereitgestellt, um den Spalt 18 zwischen dem Kragenelement 24 und dem Senkungselement 14 sicher zu füllen.

Das Depotelement 11 kann weiter aus dem Senkungselement 14 hervorragen und beim Einsetzen des Einsatzteils 20 an das Kragenelement 24 gedrückt werden. Beim Verflüssigen des Materials des Depotelements 14 wird daher Druck über das Kragenelement 24 auf die Schmelze 15 ausgeübt, wodurch sich die Schmelze 15 schneller entlang des Spaltes 18 zwischen dem Kragenelement 24 und dem Senkungselement 14 verteilt.

Die Materialmenge im Depotelement 11 kann dabei so berechnet sein, dass in jedem Fall ausreichend Schmelze 15 zur Verfügung steht, um den Spalt 18 zumindest zwischen dem Kragenelement 24 und dem Senkungselement 14 vollständig zu füllen. Weiter kann die Materialmenge ausreichend sein, um den Spalt 18 zwischen der Randfläche 26 und dem Senkungselement 14 zu füllen.

Das Toleranzausgleichselement 16 weist eine Dicke von mindestens 0,2 mm zwischen dem Kragenelement 24 und dem Senkungselement 14 auf.

Mit dem Toleranzausgleichselement 16 wird ein definierter Kraftfluss zwischen dem Einsatzteil 20 und dem Bauteil 10 bewirkt. Verschleiß und eine Lockerung des Einsatzteils 20 durch Relativbewegungen zwischen dem Einsatzteil 20 und dem Bauteil 10 werden vermieden. Weiter können Fertigungstoleranzen des Einsatzteil 20 und des Bauteils 10 vergrößert werden, wodurch Kosten gesenkt werden können.

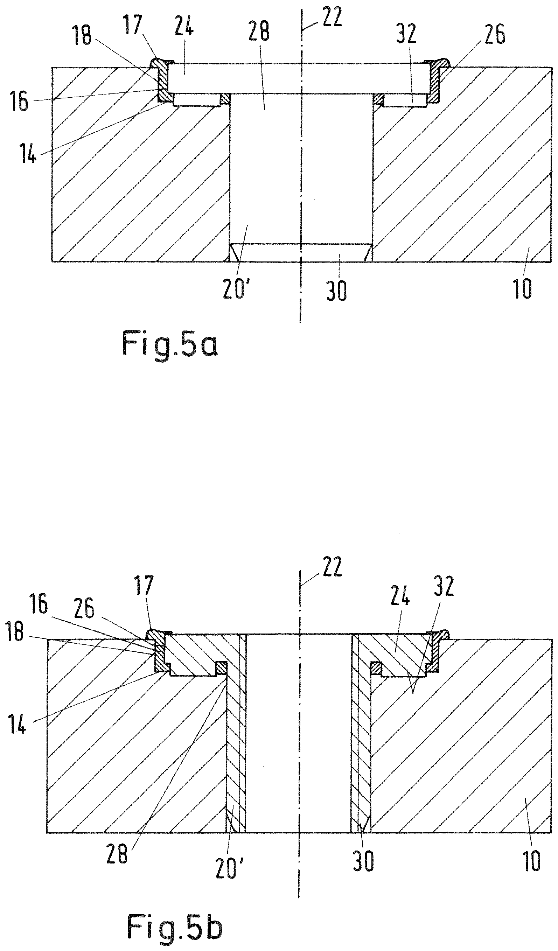

Fig. 5a zeigt eine Schnittdarstellung des Bauteils 10 mit einer schematischen Darstellung einer beispielhaften Ausführungsform des Einsatzteils 20 ohne Rändelungen oder anderen Formschlusselementen auf der radialen Außenfläche des Einsatzteils. Wenn ein Befestigungselement ein Drehmoment auf das Einsatzteil überträgt, werden die Drehmomente nicht mittels eines Formschlusses auf den radialen Umfangsflächen (z. B. mittels einer Rändelung) übertragen, sondern mittels Drehmomentsicherungselementen 32 auf der Kragenunterseite. Fig. 5b zeigt hierzu den Gewindeeinsatz in einer Schnittdarstellung. Hier wird dargestellt, dass die Drehmomentsicherungselemente 32 mit dem Kragenelement verbunden sind.

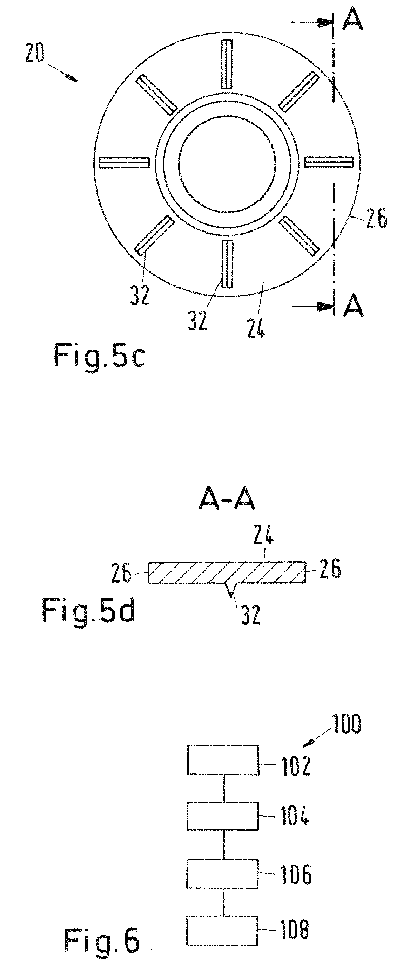

In Fig. 5c ist das Kragenelement 24 aus einer Ansicht von dem Endstück 30 aus dargestellt. Unterhalb des Kragenelements 24 weist das Kragenelement 24 Strukturen bzw. Drehmomentübertragungselemente 32 auf, die eine Erhöhung des zu übertragenden Drehmomentes beim Anziehen eines Befestigungselements in dem Einsatzteil 20 bewirken. Bevorzugt sind diese Drehmomentübertragungselemente 32 kostengünstig mittels Kaltfließpressen am Kragenelement 24 herstellbar.

Die Drehmomentübertragungselemente ragen in das erfindungsgemäße Toleranzausgleichselement teilweise oder ganz hinein. Alternativ oder zusätzlich können sie in den Grund des Senkungselementes 14 hineinragen bzw. graben sie sich dort während des Einbettens des Einsatzteils 20 ein.

Fig. 5d zeigt einen Schnitt durch das Kragenelement 24 des Einsatzteils 20. In der Schnittdarstellung ist ein Ausführungsbeispiel eines Drehmomentübertragungselements 32 gezeigt, das eine längliche, zur einer scharfen Kante zulaufende Rippen umfasst.

Figur 6 zeigt ein Flussdiagramm des Verfahrens 100 zum Befestigen eines Einsatzteils in einer Durchgangsbohrung eines Bauteils. Das zu verwendende Einsatzteil weist an einem Endstück ein von einer Randfläche begrenztes Kragenelement auf, das von einem Senkungselement der Durchgangsbohrung des Bauteils aufgenommen werden kann. Weiter ist das Einsatzteil entlang einer Längsachse länger ausgebildet als die Durchgangsbohrung durch das Bauteil. Die Randfläche weist von der Längsachse des Einsatzteils weg. Damit bildet sich immer ein Spalt unterhalb des Kragenelementes von mindestens 0,2 mm Dicke.

In einem ersten Schritt 102 wird das Einsatzteil in die Durchgangsbohrung eingesetzt. Ein weiteres Endstück des Einsatzteils, das einem Endstück, an dem das Kragenelement angeordnet ist, gegenüber liegt, wird dabei so durch die Durchgangsbohrung geführt, dass es auf der anderen Seite der Durchgangsbohrung in der Montageposition bündig an dem Bauteil anliegt. Das Senkungselement nimmt das Kragenelement auf, wobei allerdings ein Spalt zwischen dem Senkungselement und dem Kragenelement gebildet wird. Der Spalt erstreckt sich entlang des Kragenelements zumindest bis zur Randfläche des Kragenelements.

Kunststoff, der am Einsatzteil und am Bauteil angeordnet ist, wird dabei während des Einsetzens des Einsatzteils in einem parallel zu Schritt 102 auftretenden weiteren Schritt 104 zu einer Schmelze aus Kunststoff verflüssigt. Alternativ oder zusätzlich kann zwischen dem Einsatzteil und dem Bauteil ein weiteres Material angeordnet sein, das verflüssigt wird. So kann zum Beispiel ein Depotelement vorgesehen sein, das an dem Senkungselement angeordnet ist. Damit kann direkt zwischen dem Kragenelement und dem Senkungselement Schmelze hergestellt werden.

Das Einsetzen und Verflüssigen kann zum Beispiel mittels Ultraschall erfolgen. Alternativ oder zusätzlich kann eine andere Heizung bzw. eine andere Verflüssigungsmethode verwendet werden, solange diese eine Schmelze erzeugt, die während des Einsetzens in den Spalt getrieben wird und mindestens diesen ausfüllt.

Die Schmelze wird in einem weiteren Schritt 106 im Spalt entlang des Kragenelements zumindest bis zur Randfläche verdrängt und so verteilt. Das Verteilen erfolgt so lange, bis die Schmelze den Spalt füllt und somit den Hohlraum zwischen Senkungselement und Kragenelement verbindet. Überschüssige Schmelze kann aus dem Spalt ausgetrieben werden. Das Austreiben kann in die Durchgangsbohrung hinein und/oder aus dem Senkungselement in die Umgebung hinaus erfolgen.

In einem weiteren Schritt 108 erstarrt die Schmelze durch Abkühlen, indem die Energiezufuhr, beispielsweise mittels Ultraschall unterbrochen wird, um ein Toleranzausgleichselement zu erzeugen. Das Toleranzausweiselement ist damit zwischen dem Kragenelement und dem Senkungselement angeordnet und verbindet das Kragenelement mit dem Senkungselement. Weiter dient das Toleranzausgleichselement zum Befestigen des Einsatzteils an dem Bauteil und weist mindestens eine Dicke von 0,2 mm auf.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 10: Bauteil
- 11: Depotelement
- 12: Durchgangsbohrung
- 14: Senkungselement
- 15: Schmelze
- 16: Toleranzausgleichselement
- 17: Überschuss flüssigen Materials
- 18: Spalt
- 20: Einsatzteil
- 22: Längsachse
- 24: Kragenelement
- 26: Randfläche
- 28: Endstück
- 30: Endstück
- 32: Drehmomentsicherungselementen

## Patentansprüche

1. Bauteil mit einer Durchgangsbohrung (12) und einem in der Durchgangsbohrung (12) befestigten Einsatzteil (20), wobei das Einsatzteil (20) sich entlang einer Längsachse (22) in der Durchgangsbohrung (12) erstreckt und an einem Endstück (28) ein sich zumindest teilweise um die Längsachse (22) erstreckendes Kragenelement (24) mit einer von der Längsachse (22) weg weisenden Randfläche (26) aufweist und die Durchgangsbohrung (12) ein Senkungselement (14) zur Aufnahme des Kragenelements (24) umfasst, **dadurch gekennzeichnet, dass** das Bauteil (10) ein das Kragenelement (24) mit dem Senkungselement (14) verbindendes Toleranzausgleichselement (16) aufweist, das sich entlang des Kragenelements (24) zumindest bis zur Randfläche (26) erstreckt.

2. Bauteil nach Anspruch 1, **dadurch gekennzeichnet, dass** das Toleranzausgleichselement zwischen dem Senkungselement und dem Kragenelement eine Dicke von mindestens 0,2 mm, vorzugsweise in einem Bereich zwischen 0,2 mm und 2 mm, weiter vorzugsweise in einem Bereich zwischen mindestens 0,2 mm und 1 mm, aufweist.

3. Bauteil nach Anspruch 1 oder 2, **dadurch gekennzeichnet, dass** das Einsatzteil mit einem dem Endstück gegenüberliegenden weiteren Endstück bündig am Bauteil anliegt.

4. Bauteil nach Anspruch einem der Ansprüche 1 bis 3, **dadurch gekennzeichnet, dass** Material, aus dem das Toleranzausgleichselement (16) gebildet wird, in einem aus dem Senkungselement (14) hervorragenden Depotelement (11) angeordnet ist.

5. Bauteil zum Befestigen eines Einsatzteils (10) in einer Durchgangsbohrung (12) zur Aufnahme eines zu befestigenden Einsatzteils (10), wobei das zu befestigende Einsatzteil (10) an einem Endstück (28) ein sich zumindest teilweise um eine Längsachse (22) des Einsatzteils (20) erstreckendes Kragenelement (24) mit einer von der Längsachse (22) weg weisenden Randfläche (26) aufweist und die Durchgangsbohrung (12) ein Senkungselement (14) zur Aufnahme des Kragenelements (24) umfasst, **dadurch gekennzeichnet, dass** das Senkungselement (14) ein Depotelement (11) zum Verflüssigen von Material zum Erzeugen eines zwischen dem Kragenelement (24) des zu befestigenden Einsatzteils (20) und dem Senkungselement (14) angeordneten Toleranzausgleichselements (16) aufweist.

6. Verfahren zum Befestigen eines Einsatzteils in einer Durchgangsbohrung eines Bauteils, wobei das Einsatzteil an einem Endstück ein sich zumindest teilweise um eine Längsachse des Einsatzteils erstreckendes Kragenelement aufweist, das von einer von der Längsachse weg weisenden Randfläche begrenzt wird, und die Durchgangsbohrung ein Senkungselement zur Aufnahme des Kragenelements aufweist, wobei das Verfahren (100) die folgenden Schritte aufweist:
- Einsetzen (102) des Einsatzteils in die Durchgangsbohrung, wobei das Kragenelement von dem Senkungselement aufgenommen wird und mindestens ein Spalt zwischen dem Senkungselement und dem Kragenelement gebildet wird, der sich entlang des Kragenelements zumindest bis zur Randfläche erstreckt;
- Verflüssigen (104) von zwischen dem Einsatzteil und dem Bauteil angeordneten Kunststoff zu einer Schmelze während des Schrittes Einsetzen (102);
- Verteilen (106) der Schmelze im Spalt entlang des Kragenelements zumindest bis zur Randfläche, bis die Schmelze den Spalt vollständig füllt und somit den Spalt zwischen Senkungselement und Kragenelement verbindet; und
- Erstarren (108) durch Abkühlen der Schmelze zu einem Toleranzausgleichselement zum Befestigen des Einsatzteils in der Durchgangsbohrung des Bauteils.

7. Verfahren nach Anspruch 6, **dadurch gekennzeichnet, dass** im Schritt Verflüssigen, der Kunststoff mittels Ultraschall geschmolzen wird.

8. Verfahren nach Anspruch 6 oder 7, **dadurch gekennzeichnet, dass** im Schritt Verteilen die Schmelze über die Randfläche aus dem Spalt austreibt.

9. Verfahren nach einem der Ansprüche 6 bis 8, **dadurch gekennzeichnet, dass** im Schritt Verteilen die Schmelze in die Durchgangsbohrung aus dem Spalt austreibt.

10. Verfahren nach einem der Ansprüche 6 bis 9, **dadurch gekennzeichnet, dass** im Schritt Verflüssigen Kunststoff verflüssigt wird, der zwischen dem Kragenelement und den Senkungselement angeordnet ist.
